# DEMANDE DE BREVET EUROPEEN

(11) **EP 4 411 496 A1**
(43) Date de publication de la demande: **07.08.2024**
(21) Numéro de dépôt: 24155748.7
(22) Date de dépôt: 05.02.2024
(51) Int. Cl.: G05B 19/418

(54) **SYSTEME DE GESTION D'UNE INSTALLATION COMPORTANT DES ROBOTS INDUSTRIELS**

(30) Priorité: 06.02.2023 FR 2301112
(71) Demandeur: B & S Robsim, 67500 Haguenau (FR)
(72) Inventeur: SCHNELLDORFER, Bodo, 67500 Haguenau (FR)
(74) Mandataire: Bugnion Genève

(57) **Abrégé**

Système de gestion d'une installation mettant en oeuvre des robots industriels (R1, R2, R3), ledit système comportant un module de gestion (M) configuré pour communiquer avec lesdits robots industriels par l'intermédiaire d'un réseau de communication, chaque robot industriel comportant une unité de traitement (4), une interface de communication (6) avec le réseau de communication (CT) et au moins un dispositif effecteur (8) muni d'un outil (OT), le module de gestion (M) étant configuré, suite à une requête de production (REQ),:
- pour déterminer la disponibilité d'au moins un robot industriel,
- pour vérifier l'adaptabilité dudit robot industriel à une nouvelle tâche,
- pour déclencher un processus de configuration dudit robot industriel à la nouvelle tâche en activant un paquet technologique adapté de sorte que ledit robot industriel soit apte à réaliser la nouvelle tâche à effectuer.

## Description

### DOMAINE TECHNIQUE ET ART ANTERIEUR

La présente invention se rapporte à un système de gestion de l'activité du parc de robots d'une installation et à un procédé de gestion de ladite installation.

Les unités de production sont de plus en plus automatisées et pour cela elles utilisent de robots qui effectuent des tâches répétitives, par exemple le vissage, le soudage ou le sertissage. Le ou les robots font partie d'une chaîne de production et ont chacun une ou plusieurs tâches assignées. Cette configuration est particulièrement adaptée à des productions de masse, les chaînes de production produisant toujours le même type de produit. L'activité des robots peut être adaptée au produit. Par exemple dans le cas d'une fabrication d'une portière d'un véhicule automobile qui met en oeuvre des étapes de soudure, l'épaisseur de la soudure peut dépendre du modèle de portière. Il est possible d'adapter le robot pour qu'il réalise la soudure d'épaisseur adaptée.

Cependant chaque robot reste assigné à une tâche ou une séquence de tâches.

Or les séries tendent à être plus petites et les produits fabriqués extrêmement variés. Il peut alors arriver qu'un robot avec une tâche assignée n'ait pas d'activité car les étapes de production d'un produit ne comprennent pas la tâche ou les tâches du robot.

Il peut également survenir que le site industriel ne comporte pas de robot capable de réaliser l'une des tâches.

Le coût de non-utilisation d'un équipement industriel, notamment d'un robot, est très élevé. En outre il occupe un emplacement qui ne peut pas être utilisé pour une autre activité.

Le prix d'achat d'un robot étant élevé, il n'est pas nécessairement possible de prévoir d'acquérir un robot pour chaque étape. En outre les délais entre la commande d'objets et leur livraison ayant tendance à se raccourcir, il n'est pas possible d'attendre une commande ferme pour acquérir un robot. Cela nécessitant d'anticiper l'achat d'un ou de plusieurs robots en vue d'une potentielle future fabrication d'un produit, ceci représenterait un risque financier important.

### EXPOSÉ DE l'INVENTION

C'est par conséquent un but de la présente invention d'offrir un système de gestion d'une installation industrielle comportant au moins un robot industriel présentant un fonctionnement amélioré.

Le but énoncé ci-dessus est atteint par un système de gestion d'une installation comportant plusieurs robots comprenant des moyens pour déterminer au moins une tâche à effectuer, des moyens pour détecter la disponibilité d'au moins un robot industriel, des moyens pour vérifier si le robot industriel est adaptable à la tâche à effectuer, des moyens pour modifier le paquet technologique du robot industriel de sorte à le rendre apte à réaliser la tâche à effectuer.

On entend par « paquet technologique » l'ensemble des moyens technologiques permettant de configurer le robot pour une ou des tâches données ; ce paquet comporte au moins un programme informatique permettant de commander le robot pour effectuer la ou les tâches, et l'outil destiné à cette ou ces tâches. Il peut comporter d'autres moyens, par exemple des moyens optiques, si la tâche demande une reconnaissance de l'environnement, par exemple si la tâche consiste à saisir de objets dans une caisse.

Dans un exemple de réalisation, la modification du paquet technologique comporte le chargement d'un nouveau programme informatique dans le robot et le changement d'outil.

Dans un autre exemple de réalisation, la modification du paquet technologique comporte l'activation d'un programme informatique déjà présent dans le robot et le changement d'outil.

Le changement d'outil peut s'effectuer de différentes manières. Dans un exemple, les outils sont disposés à proximité du robot et le robot assure automatiquement le changement d'outil. Dans un autre exemple, les outils sont stockés dans une réserve et un robot mobile transporte l'outil de la réserve au robot et le remplacement est effectué soit par le robot industriel lui-même, soit par un opérateur, soit éventuellement par le robot mobile.

Un objet de la présente invention est alors un système de gestion d'une installation mettant en oeuvre des robots industriel, ledit système comportant un module de gestion configuré pour communiquer avec lesdits robots industriels par l'intermédiaire d'un réseau de communication, chaque robot industriel comportant une unité de traitement, une interface de communicationavec le réseau de communication et au moins un dispositif effecteur muni d'au moins un outil, le module de gestion étant configuré suite à une requête de production:
- pour déterminer la disponibilité d'au moins un robot industriel,
- pour vérifier l'adaptabilité dudit robot industriel à au moins une nouvelle tâche,
- pour déclencher un processus de configuration dudit robot industriel à la au moins nouvelle tâche en activant un paquet technologique adapté de sorte que ledit robot industriel soit apte à réaliser la au moins une nouvelle tâche à effectuer.

Dans un exemple de réalisation, l'activation du paquet technologique comporte le chargement ou l'activation d'un programme pour l'exécution de la au moins une nouvelle tâche et la modification de la configuration mécanique dudit robot industriel. Le programme peut êtretransféré au robot industriel par des moyens distants, par exemple via un serveur FTP (file transfer protocole en terminologie anglosaxonne).

Très avantageusemement, la modification de la configuration mécanique de la au moins une nouvelle tâche comporte la mise en place d'au moins un outil adapté à l'exécution d'une nouvelle tâche.

Selon une caractéristique additionnelle, le paquet technologique comporte également la mise en place de moyens supplémentaires pour assister la réalisation de la nouvelle tâche, par exemple des moyens optiques.

Selon uen autre caractéristique additionnelle, le module de gestion est configuré pour déterminer la au moins une nouvelle tâche à exécuter sur la base de la requête de production.

Dans un exemple préféré, le système de gestion comporte une robot mobile configuré pour amener l'outil à installer au robot et le robot mobile comporte une unité de traitement, une interface de communication avec le réseau de communication de sorte à recevoir des instructions du module de gestion. Le module de gestion peut être est configuré pour envoyer au moins une instruction au robot mobile d'apporter ledit outil au robot industriel.

Un autre objet de la présente invention est un procédé de gestion d'un site industriel comportant au moins un robot industriel comportant :
- Réception d'une requête de production,
- Identification de la au moins nouvelle tâche à effectuer,
- Recherche d'une robot industriel disponible,
- Vérification de l'aptitude du robot industriel à exécuter la nouvelle tâche,
- Activation d'un paquet technologique correspondant à la nouvelle tâche à effectuer, comprenant au moins l'activation d'un programme d'ordinateur de commande du robot et la configuration mécanique du robot industriel à la nouvelle tâche.

Par exemple, la configuration mécanique du robot industriel comprend l'identification des modifications mécaniques à apporter au robot industriel et la mise en oeuvre de ces modifications mécaniques.

De préférence, les modifications mécaniques comportent la mise en place d'au moins un outil adapté à l'exécution de la nouvelle tâche.

La requête de production peut être émise par un système de gestion de traitement d'objets, ledit traitement étant par exemple la fabrication, la réparation, le démontage ou le test d'objets.

### BREVE DESCRIPTION DES DESSINS

La présente demande sera mieux comprise à l'aide de la description qui va suivre et des dessins en annexe sur lesquels :
- La figure 1 est une représentation schématique d'un exemple d'installation à laquelle s'applique la présente invention,
- La figure 2 est un organigramme d'un exemple de procéde de gestion selon l'invention,
- La figure 3 est une représentation schématique d'un autre exemple d'installation à laquelle s'applique la présente invention,
- La figure 4 est une représentation schématique d'une installation dans laquelle les robots industriels sont mobiles.

### DÉTAILLÉE DE MODES DE RÉALISATION

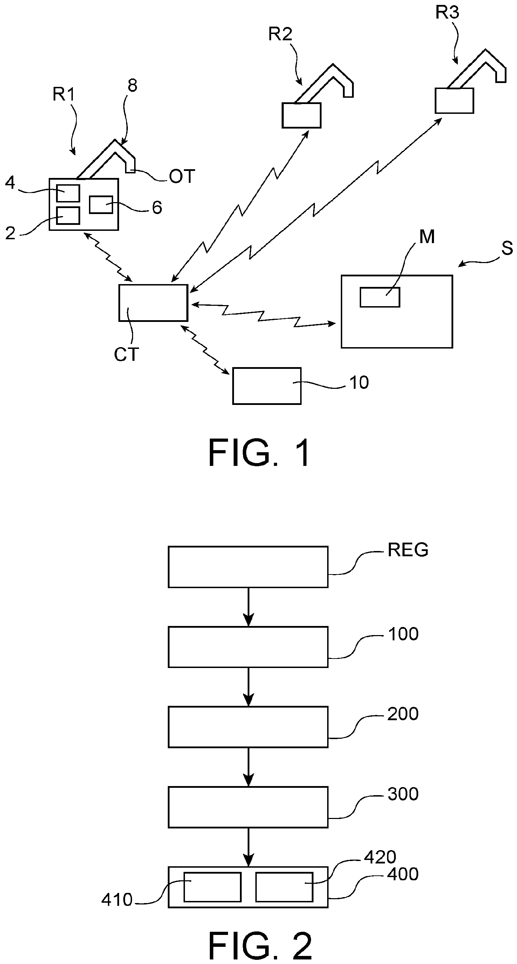

Sur la figure 1, on peut voir une représentation schématique d'un site industriel comportant un parc de trois robots industriels R1, R2 et R3 et un système industriel S de gestion du parc de robots configuré pour gérer l'activité des robots industriels en fonction des besoins du site industriel.

Dans l'exemple qui va être décrit, le site industriel est adapté à la fabrication de d'objets. En variante et de manière non limitative, il peut être adapté à la réparation d'objets, au démontage d'objets ou au test d'objets. Il peut être adapté à plusieurs de ces activités. Notamment le système de gestion permet cette adaptation.

Le site industriel est par exemple une usine ou un atelier.

Le système de gestion comporte un module de gestion M et un réseau de communication TC apte à permettre le couplage entre le module de gestion M et les robots industriels.

Les trois robots industriels sont similaires, seul le robot R1 sera décrit en détail.

Le robot industriel R1 est un automate apte à réaliser une séquence de tâches. Le robot industriel R1 peut par exemple être utilisé pour réaliser une tâche parmi la liste non exhaustive suivante : saisie d'objets, déplacement d'objets, réalisation de mesures, brasage/soudage, perçage, mise en forme.

Le robot industriel R1 comporte une unité de stockage 2 d'un ou plusieurs programmes d'ordinateur, une unité de traitement 4 adaptée notamment à mettre en oeuvre des instructions pour l'exécution d'un ou plusieurs programmes d'ordinateur. L'unité de traitement 4 est apte à coopérer avec une interface de communication 6, adaptée à être couplée également au réseau de communication CT de sorte à permettre au robot de transmettre des informations notamment sur son état au module de gestion et à recevoir et traiter des instructions du module de gestion et/ou des données, notamment un programme d'ordinateur. En outre le robot R1 peut communiquer avec d'autres entités couplées au réseau de communication, par exemple un robot mobile comme cela sera décrit ci-après.

Le robot industriel R1 comporte un dispositif effecteur 8 apte à réaliser des tâches. Le dispositif effecteur peut par exemple être un bras robotique pourvu d'un outil OT. Le dispositif effecteur 8 est typiquement piloté par l'unité de traitement, de sorte à réaliser la tâches programmée et/ou demandée.

L'interface de communicatipon peut être une interface sans fil type radio ou une interface filaire dans le cas de robots fixes.

Dans cet exemple, chaque robot R1, R2, R3 a un emplacement donné sur le site.

Le module de gestion M est couplé au réseau de communication CT, de sorte à pouvoir recevoir des informations et transmettre des commandes à l'ensemble des entités accessibles via le réseau de communication CT, et en particulier aux robots industriels R1, R2, R3.

Le module de gestion M peut également comporter une interface utilisateur, par exemple un écran, pour permettre à un opérateur de paramétrer le système selon l'invention.

Dans un exemple de réalisation, le système de gestion est en outre configuré pour communiquer avec un système de traitement de la production 10 du site industriel, ce traitement comprend notamment la gestion des commandes d'objets à fabriquer, la gestion des stocks de pièces détachées et la gestion des expéditions des objets.

Les requêtes de production peuvent être envoyées directement du système de traitement 10 au système de gestion. En variante, la requête de production peut être émise par l'utilisateur. En variante encore, le système de gestion intégre directement le traitement de la production du site et génère automatiquement les requêtes. On entend par « requête de production » une requête de fabrication d'une série d'objets, de réparation d'une série d'objets, de démontage d'une série d'objets, de test d'une série d'objets...

Le site industriel comporte en outre un stock d'outils configurés pour être montés sur le bras robotique du robot industriel. Les outils sont par exemple une pince, un dispositif de découpe, un poinçon, un dispositif à souder, un dispositif de perçage, un dispositif de sertissage. Des équipements supplémentaires peuvent être prévus pour assister dans l'exécution de la tâche, comme cela cela décrit ci-après.

Dans un exemple de réalisation, le stock d'outils est disposé à proximité de chaque robot. En variante, le stock d'outils est disposé dans une réserve, le stock étant alors partagé entre les différents robots.

Le système de gestion est configuré pour recevoir des requêtes du système de traitement de la production du site industriel, par exemple des requêtes de production d'une série d'objets, et pour traiter ces requêtes.

Le module de gestion est également configuré pour transférer un programme informatique aux robots en fonction de la ou des tâches qui leur sont assignées. Ce transfert peut être réalisé par voie filaire entre le module de gestion et l'unité de stockage de chaque robot. En variante, un opérateur charge le programme sur instruction du module de gestion. Dans un exemple avantageux, le transfert se fait par des moyens distants, par exemple via un serveur FTP (File Transfer Protocole en terminologie anglosaxonne) qui permet de transférer des fichiers par internet ou par le biais d'un réseau informatique local type intranet.

Un exemple de procédé de gestion mis en oeuvre par le système de gestion S va maintenant être décrit en relation avec la figure 2. Dans cet exemple, les robots considérés comporte un seul outil. Le cas où les robots comportent plusieurs outils sera décrit ci-après.

Par exemple, une requête de fabrication d'une série d'objets est envoyée au système de gestion.

Lors d'une première étape 100, le système de gestion traite la requête REQ.

Le traitement de la requête consiste notamment à déterminer quelles étapes sont nécessaires à la fabrication dudit objet. Pour cela, le système de gestion peut disposer d'une bibliothèque de procédés de fabrication d'objets ou avoir accès à cette bibliothèque. Ainsi en fonction de la requête reçue, il sélectionne le procédé de fabrication adapté. Il peut alors identifier les tâches à effectuer par le ou les robots. Dans la description qui suit, on considère qu'une tâche à exécuter a été identifiée et sera désignée « nouvelle tâche ».

Lors d'une étape suivante 200, le système de gestion effectue une analyse du parc de robots pour déterminer quel(s) robot(s) est(sont) utilisable(s) pour cette fabrication et quel(s) robot(s) sont disponibles. On entend par « robot disponible » un robot qui n'est pas en train d'effectuer une tâche ou à qui une tâche a été affectée et va bientôt commencer cette tâche. Pour cela, chaque robot envoie au module de commande via le réseau de communication des informations sur son état qui peut être : occupé, disponible, en cours d'adaptation à une nouvelle tâche. Cette information permet d'identifier le ou les robots disponibles.

Si un robot n'est pas disponible, un message est envoyé informant de ce manque de disponibilité.

Lors d'une étape suivante 300, lorsque le système de gestion a identifié un robot disponible, il vérifie que le robot identifié est adaptable à l'exécution de la nouvelle tâche. Si le robot est adaptable, le système lors d'une étape suivante 400 lance une procédure de configuration du robot disponible à cette tâche. Cette procédure de configuration comporte l'adaptation du paquet technologique du robot à la nouvelle tâche. Si le robot n'est pas adaptable, le système sélectionne un autre robot disponible. Si aucun autre robot industriel n'est disponible un message est envoyé informant de ce manque de disponibilité.

Le paquet technologique comprend l'ensemble des moyens technologiques permettant de rendre le robot apte à effectuer la nouvelle tâche, ce paquet contient au moins un programme informatique permettant de commander le robot pour effectuer ladite nouvelle tâche, la ou les adaptations mécaniques à apporter au robot, notamment la mise en place d'un ou d'outils destinés à cette nouvelle tâche à monter sur le bras robotique et éventuellement des moyens supplémentaires. Généralement des moyens optiques, ou au moins des moyens de reconnaissance dans l'espace équipent le robot pour assurer le positionnement du robot dans l'espace.

Dans les cas particulier où il ne comporte pas de tels moyens ou pour les cas où des moyens particuliers sont requis, ces moyens supplémentaires sont par exemple des moyens optiques comportant une ou plusieurs caméras et des moyens de traitement des images et de reconnaissance des objets dans le cas où la connaissance de l'emplacement et de la forme des objets sont requises, par exemple lorsque la nouvelle tâche est une saisie d'objets.

Le procédure de configuration comprend au moins :
- Une phase 410 d'adaptation du programme d'ordinateur,
- Une phase 420 de mise en place de l'outil adapté à la nouvelle tâche sur le bras robotique.

L'adaptation du programme informatique peut comprendre soit le transfert du programme d'ordinateur au robot, soit l'activation du programme d'ordinateur qui était déjà chargé dans l'unité de stockage du robot. On peut envisager de supprimer le précédent programme d'ordinateur ou de le conserver et de suspendre son exécution.

La mise en place de l'outil comporte la sélection de l'outil OT adapté à l'exécution de la tâche et le montage de l'outil sur le bras robotique.

Dans un exemple de réalisation, l'information sur l'outil à monter est envoyé directement par le système de gestion. L'unité de traitement du robot reçoit cette information et commande le bras robotique pour qu'il monte l'outil qui est disposé à proximité du robot. L'outil peut être identifié par différents moyens, tels qu'un émetteur de signal optique, un support comportant un symbole optique, par exemple un code-barres, une datamatrix, un numéro d'identification, un émetteur de signal électromagnétique, un transpondeur tel qu'une étiquette RFID (Radio Frequency Identification en terminologie anglosaxonne), un marquage mécanique, un émetteur de signal sonore. Le robot comporte des moyens adaptés pour prendre connaissance de ces moyens d'identification et déterminer s'ils sont ceux de l'outil requis. Le bras effecteur est alors équipé d'un dispositif permettant la prise de connaissance de ces moyens d'identification, par exemple un lecteur optique ou un lecteur RFID.

Le robot industriel R1, en particulier le bras robotique, est commandé pour se positionner de sorte à connecter l'outil au bras robotique. Si le bras robotique comporte déjà un outil, celui-ci est préalablment déconnecté du bras robotique. Par exemple, un support d'outils est prévu à proximité du robot et chaque emplacement du support est identifié pour accueillir un outil donné. Lors du choix de l'outil, les moyens d'identification de l'outil peuvent être sur l'outil ou sur le support.

En variante, on peut envisager que le support d'outils soit automatisé et être commandé par le module de commande pour présenter le bon outil au robot.

Très avantageusement, une étape de vérification de la configuration du robot a ensuite lieu avant la mise en service effective du robot. Si le résultat de cette vérification est positif, la procédure de configuration est terminée. Si le résultat de cette vérification est négatif, par exemple un technicien intervient.

Dans un autre exemple de réalisation, la phase de mise en place de l'outil est commandée automatiquement par le chargement du programme d'ordinateur qui commande directement le bras effecteur pour qu'il monte l'outil adapté. Lors de l'exécution du programme d'ordinateur, l'unité de traitement envoie une commande au bras effecteur d'aller chercher un outil déterminé qui a été identifié dans le programme d'ordinateur.

Dans un autre exemple de réalisation, la mise en place de l'outil peut être réalisé manuellement par un opérateur. Pour cela, il peut être envisagé que la représentation de l'outil à monter ou son code d'identification soit affiché sur un écran du robot, permettant à l'opérateur de le sélectionner. En variante, le support est automatisé et est commandé par le module de commande pour proposer directement le bon outil à l'opérateur.

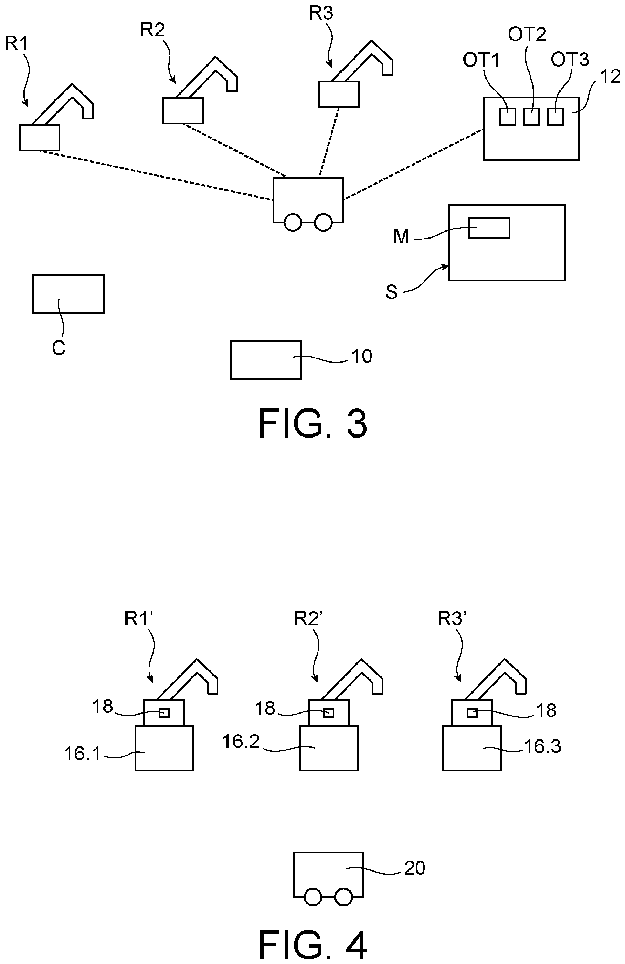

Dans un autre exemple de réalisation schématisé sur la figure 3, les outils OT1, OT2, OT3 sont stockés dans une réserve 12 et un robot mobile 14 est mis en oeuvre pour transporter l'outil OT entre la réserve et le robot industriel R1.

Par exemple, le robot mobile 14 comporte une unité de traitement et une interface de communication adaptée à être couplée également au réseau de communication, de sorte à permettre au robot mobile de transmettre des informations notamment sur son état au module de gestion et à recevoir et traiter des instructions émises par le module de gestion et/ou des données, notamment un programme d'ordinateur. En outre le robot peut communiquer avec d'autres entités couplées au réseau de communication.

Le robot mobile 14 comporte un dispositif moteur apte à mettre en mouvement, de manière contrôlée, le robot mobile 14 pour la réalisation de courses entre différents emplacements du site industriel, notamment entre la réserve d'outils et les différents robots. Le dispositif moteur peut ainsi être piloté pour l'unité de traitement, de sorte à réaliser des déplacements entre différents emplacements du site industriel. Avantageusement le dispositif moteur comporte un moteur électrique et une batterie électrique rechargeable.

Le robot mobile 14 comporte un dispositif de préhension apte à saisir un outil et éventuellement un dispositif de manipulation pour coupler/découpler l'outil au bras robotique du robot.

Dans cet exemple, l'unité de traitement du robot mobile reçoit des instructions du module de gestion d'aller chercher l'outil requis à la réserve 12 et de l'apporter au robot R1 en cours de configuration. En fonction du type de robot, la mise en place de l'outil peut être effectuée par le robot uniquement, par le robot mobile uniquement ou par coopération du bras robotique et du robot mobile. Les trajets du robot mobile 14 entre les robots et la réserve sont symbolisés par les traits interrompus.

En variante, le robot mobile forme le support d'outils et se déplace vers les robots pour permettre le montage de l'outil adapté.

Dans l'exemple décrit ci-dessus, les robots sont fixes sur le site industriel. Dans un autre exemple de réalisation schématisé sur la figure 4, le site industriel comporte des stations d'accueil 16.1, 16.2, 16.3 pour les robots R1', R2', R3', les robots pouvant être disposés sur l'une des stations d'accueil en fonction de la tâche à effectuer.

La station d'accueil 16 comporte un support arrangé de sorte à permettre l'accueil d'au moins un des robots industriels du parc et le maintien dudit robot industriel R1', R2', R3' dans une position adaptée à la réalisation des tâches susceptibles d'être assignées audit robot industriel R1', R2', R3' dans la station correspondante.

Le support peut par exemple comprendre une structure mécanique sur laquelle peut reposer le robot industriel dans une position adaptée. La station d'accueil peut être arrangée de sorte à transmettre un signal de démarrage au robot industriel, lorsque ledit robot industriel 30 est positionné dans le dispositif d'accueil.

La station d'accueil peut comporter des moyens d'alimentation du robot industriel.

De préférence, puisque les robots industriels R1', R2', R3' n'ont plus de position fixe, ils comportent avantageusement des moyens de localisation 18 au sein du site industriel. Les moyens de localisation 18 envoient une information de localisation au module de gestion permettant de repérer les robots sur le site industriel. De préférence, un robot mobile 20 est configuré pour transporter un robot industriel d'une station d'accueil à l'autre.

Dans le cas de robots industriels déplaçables, le fonctionnement du système de gestion comporte après sélection du robot industriel à utiliser, l'envoi d'une instruction au robot mobile de transport de positionner le robot industriel sélectionné sur la bonne station d'accueil, si celui-ci n'est pas déjà positionné sur la bonne station d'accueil. Le robot mobile de transport est similaire au robot mobile en charge de l'approvisionnement en outils, et comporte des moyens de manutention d'un robot industriel.

Il sera compris que l'invention s'applique également si plusieurs robots industriels sont requis et doivent être configurés pour de nouvelles tâches. Dans ce cas, la module de gestion comprend une étape d'attribution des tâches à chacun des robots industriels, par exemple en tenant compte par exemple de la position des robots industriels, de l'état de charge des batteries dans le cas d'un robot industriel mobile.

Dans l'exemple décrit ci-dessus, le robot effectue une seule tâche, par exemple un perçage, un sertissage... il sera compris que la présente invention s'applique à une séquence de tâches, cette séquence pouvant être réalisée par le même outil ou par plusieurs outils. Le robot peut comporter plusieurs outils et l'unité de traitement peut exécuter le programme correspondant à cette séquence de tâches. Lors de la configuration du robot tout ou partie des outils peut être remplacé.

Les outils peuvent être portés par un bras effecteur ou plusieurs bras effecteurs.

Grâce à l'invention, l'activité du site industriel, notamment l'optimisation de l'occupation des robots et de la production, sont accrues en automatisant la détection des robots disponibles et leur reconfiguration.

## Revendications

1. Système de gestion d'une installation mettant en oeuvre des robots industriels (R1, R2, R3), ledit système comportant un module de gestion (M) configuré pour communiquer avec lesdits robots industriels par l'intermédiaire d'un réseau de communication, chaque robot industriel comportant une unité de traitement (4), une interface de communication (6) avec le réseau de communication (CT) et au moins un dispositif effecteur (8) muni d'au moins un outil (OT), le module de gestion (M) étant configuré suite à une requête de production (REQ):
- pour déterminer la disponibilité d'au moins un robot industriel,
- pour vérifier l'adaptabilité dudit robot industriel à au moins une nouvelle tâche,
- pour déclencher un processus de configuration dudit robot industriel à la au moins nouvelle tâche en activant un paquet technologique adapté de sorte que ledit robot industriel soit apte à réaliser la au moins une nouvelle tâche à effectuer.

2. Système de gestion selon la revendication 1, dans lequel l'activation du paquet technologique comporte le chargement ou l'activation d'un programme pour l'exécution de la au moins une nouvelle tâche et la modification de la configuration mécanique dudit robot industriel.

3. Système de gestion selon la revendication 2, dans lequel le programme est transféré au robot industriel par des moyens distants, par exemple via un serveur FTP (file transfer protocole en terminologie anglosaxonne).

4. Système de gestion selon la revendication 2 ou 3, dans lequel la modification de la configuration mécanique de la au moins une nouvelle tâche comporte la mise en place d'au moins un outil adapté à l'exécution d'une nouvelle tâche.

5. Système de gestion selon la revendication 2, 3 ou 4, dans lequel le paquet technologique comporte également la mise en place de moyens supplémentaires pour assister la réalisation de la nouvelle tâche, par exemple des moyens optiques.

6. Système de gestion selon l'une des revendications 1 à 5, dans lequel le module de gestion est configuré pour déterminer la au moins une nouvelle tâche à exécuter sur la base de la requête de production.

7. Système de gestion selon l'une des revendications 1 à 6, comportant une robot mobile configuré pour amener l'outil à installer au robot et dans lequel le robot mobile comporte une unité de traitement, une interface de communication avec le réseau de communication de sorte à recevoir des instructions du module de gestion, et dans lequel le module de gestion est configuré pour envoyer au moins une instruction au robot mobile d'apporter ledit outil au robot industriel.

8. Procédé de gestion d'un site industriel comportant au moins un robot industriel comportant :
- Réception d'une requête de production,
- Identification de la au moins nouvelle tâche à effectuer,
- Recherche d'une robot industriel disponible,
- Vérification de l'aptitude du robot industriel à exécuter la nouvelle tâche,
- Activation d'un paquet technologique correspondant à la nouvelle tâche à effectuer, comprenant au moins l'activation d'un programme d'ordinateur de commande du robot et la configuration mécanique du robot industriel à la nouvelle tâche.

9. Procédé de gestion selon la revendication 8, dans lequel la configuration mécanique du robot industriel comprend l'identification des modifications mécaniques à apporter au robot industriel et la mise en oeuvre de ces modifications mécaniques.

10. Procédé de gestion selon la revendication 9, dans lequel les modifications mécaniques comportent la mise en place d'au moins un outil adapté à l'exécution de la nouvelle tâche.

11. Procéde de gestion selon la revendication 8, 9 ou 10, dans lequel la requête de production est émise par un système de gestion de traitement d'objets, ledit traitement étant la fabrication, la réparation, le démontage ou le test d'objets.
